# FASCICULE DE BREVET EUROPEEN

(11) **EP 0 986 871 B1**
(45) Date de publication et mention de la délivrance du brevet: **30.10.2002**
(21) Numéro de dépôt: 98929483.0
(22) Date de dépôt: 04.06.1998
(51) Int. Cl.: H04L 1/00, H04L 1/12

(54) **PROCEDE DE TRANSMISSION DE DONNEES PAR VOIE RADIO**
VERFAHREN ZUR ÜBERTRAGUNG VON DATEN ÜBER EINEN FUNKKANAL
DATA TRANSMISSION METHOD BY RADIOCOMMUNICATION CHANNEL

(30) Priorité: 06.06.1997 FR 9707035
(43) Date de publication de la demande: 22.03.2000
(73) Titulaire: SAGEM S.A., 75116 Paris (FR)
(72) Inventeur: HEURTAUX, Frédéric, F-13610 Le Puy Sainte Réparade (FR); SEVENS, André, F-95320 Saint Leu la Forêt (FR)
(74) Mandataire: Bloch, Gérard
(86) Numéro de dépôt international: FR9801131
(87) Numéro de publication internationale: WO98056134

(56) Documents cités:
- EP-A- 0 727 891
- WO-A-95/27345
- WO-A-97/11542
- WO-A-97/15131
- GB-A- 2 216 752
- US-A- 5 121 395

## Description

La transmission de données, entre un émetteur et un récepteur séparés par un milieu de transmission perturbant leur transmission, doit être protégée contre ces perturbations qui entraînent des erreurs en réception.

On peut par exemple ajouter aux données un simple bit de parité ou un mot de code, relativement court, de détection d'une erreur ou plus dans un bloc de données reçues et le récepteur redemande, s'il est équipé en émission, une retransmission du bloc en cas d'erreur.

Dans le cas du problème à l'origine de la présente invention, il s'agit de transmission radio, comme dans un réseau de téléphonie GSM.

Pour les transmissions radio, les parasites atmosphériques et de relief sont susceptibles de perturber, parfois très fortement, les transmissions. De ce fait, il faut pouvoir tolérer des erreurs, sans devoir demander une retransmission, qui risquerait d'être tout autant perturbée. On ajoute alors aux données utiles des données de redondance qui permettent non seulement de détecter, jusqu'à un nombre déterminé, les erreurs dans un bloc de données, mais aussi de localiser et donc de corriger, par inversion, les bits erronés du bloc.

En d'autres termes, si l'on prend l'exemple de blocs de données utiles qui, pour certains, ne diffèrent entre eux que par un seul bit et peuvent donc être pris l'un pour l'autre en cas d'erreur sur ce bit en réception, l'adjonction des bits de redondance, qui forment une signature particulière pour chaque bloc, permet à ces blocs protégés de différer alors de N bits.

Si donc l'un des blocs ainsi protégés est entaché de 1 à N - 1 erreurs sur des bits déterminés qui tendraient à le transformer en un autre bloc, on le détectera car le bloc erroné ne présentera pas la corrélation prévue entre tous ses bits, engendrée par la redondance. Si le nombre de bits erronés ne dépasse pas la moitié de la "distance" de N bits séparant, ou différenciant, le bloc considéré des autres blocs, une correction de ces bits grâce à la redondance rétablit l'intégrité du bloc.

Ainsi, en réception, et pour chaque bloc possible, sans erreur, on étend la recherche de sa représentation à une constellation de représentations qui n'en diffèrent que de 1 à N/2 bits (erronés), représentations erronées que l'on décidera de reconnaître finalement comme étant en réalité le bloc sans erreur considéré.

Des perturbations radio intenses et de relativement longue durée peuvent cependant quasiment interrompre toute réception d'un bloc de données et donc mettre en erreur un nombre de bits supérieur à celui que la redondance permet de tolérer. Pour se prémunir des effets de ces perturbations, on étale dans le temps l'émission du bloc en le fractionnant en paquets émis dans des rafales (bursts) successives, chaque rafale pouvant comporter plusieurs paquets, mais appartenant à des blocs différents.

En outre, la redondance ne se présente pas sous la forme de bits spécifiques qui risqueraient d'être tous perdus avec une rafale, c'est-à-dire qu'il s'agit non d'une juxtaposition de bits de redondance aux bits de données utiles mais d'une transformation globale, par un algorithme, de la représentation du bloc de données utiles en une autre représentation redondante, d'un seul tenant. L'information utile et la redondance sont ainsi intégrées, ou indissociables en transmission, dans la totalité du nouveau bloc et la redondance existe donc en tout point de ce nouveau bloc de taille accrue.

Le risque lié à la perte d'une rafale affecte ainsi plusieurs blocs différents et non plus un seul mais, en contrepartie, la transmission de chaque bloc n'est affectée que de façon beaucoup plus limitée par la perte d'une rafale et la redondance est suffisante en réception pour reconstituer les données des blocs émis, par un algorithme d'extraction des données utiles, inverse de l'algorithme d'émission.

Un tel mode de transmission sécurisée est utilisé par exemple dans un terminal de radiotéléphonie GSM. En réception, le terminal reçoit des trames de rafales en nombre déterminé formant un bloc de données avec redondance. Cette redondance présente cependant l'inconvénient de nécessiter un traitement logique des bits selon l'algorithme d'extraction, donc de faire fonctionner, et consommer, un circuit de traitement tout en accroissant la consommation des circuits radio. Ceci est aussi valable pour l'émission. Il en est de même en état de veille, dans lequel le terminal reçoit cycliquement une trame.

Or, l'autonomie de l'alimentation des terminaux radio portables est relativement limitée.

WO 95/27 345 A enseigne d'émettre un nombre fixe de paquets, égal (au moins) à P paquets avec redondance (premier mode), ou bien égal (au plus) à P/2 paquets sans redondance et avec demandes éventuelles de retransmission, en commutant d'un mode à l'autre selon que la qualité de transmission est mauvaise ou non.

Comme expliqué au début, la transmission sans redondance n'est pas adaptée au problème présent et la transmission fait donc en pratique intervenir le nombre maximal de P paquets.

WO 97/11 542 enseigne d'entrelacer des paquets de bits à émettre et, en réception, d'estimer la qualité de transmission de chaque bit par référence aux niveaux 0 et 1 logiques, pour n'analyser qu'un nombre restreint déterminé de paquets. Cependant cette estimation, à partir du niveau reçu, n'est pas fiable puisqu'un parasite peut très bien transformer un niveau logique en exactement l'autre.

En conséquence, l'invention vise à limiter, au moins en réception, le surplus de consommation, électrique ou en temps machine, lié à la redondance, sans toutefois perdre la protection qu'offre celle-ci et à proposer un procédé de détermination du nombre minimal de paquets à décoder pour reconstituer un bloc d'information du récepteur pour une qualité donnée de la voie radio.

A cet effet, l'invention concerne un procédé de transmission de données par voie radio, entre un équipement émetteur et un équipement récepteur, à travers un milieu de transmission perturbateur, selon la revendication 1

Ainsi, ayant estimé la qualité de la voie de transmission, on peut choisir d'émettre un nombre de paquets inférieur au nombre déterminé et supérieur ou égal au nombre minimal estimé être nécessaire.

Dans un premier cas, d'émission du nombre minimal de paquets, l'équipement récepteur prendra, a priori, en compte tous les paquets reçus, bien qu'il ne soit cependant pas exclu de tenter la reconstitution à partir d'un nombre encore moindre si la qualité réelle est meilleure que celle prévue. En d'autres termes, la correspondance évoquée ci-dessus peut en général être une égalité entre le nombre minimal et le nombre effectif de paquets pris en compte, mais une variation, dans un sens ou dans l'autre, de la qualité réelle de transmission peut cependant entraîner une modulation du nombre de paquets pris en compte par rapport au nombre considéré, a priori, comme minimal et suffisant.

Le concept de l'invention, qui consiste en définitive à écarter les paquets estimés être superflus, peut être exclusivement appliqué en émission, mais son application bénéficie à la fois à l'équipement émetteur, dont en particulier les circuits radio de puissance vont fonctionner moins souvent, et à l'équipement récepteur, à trafic réduit. On limite en effet dans ce dernier le volume de données traitées à un strict minimum et on peut ainsi conserver plus longtemps au repos les circuits effectuant l'analyse ou encore les affecter à d'autres tâches. Et, même si la reconstitution du bloc, à partir d'un nombre réduit de paquets, est plus complexe, on peut économiser de l'énergie de par la non-prise en compte, en réception radio ou en traitement, de tous les paquets du bloc.

Dans un deuxième cas, d'émission du nombre déterminé de paquets, le concept de l'invention n'est alors appliqué qu'en réception, où l'on exploite l'estimation de la qualité, avec les avantages mentionnés ci-dessus.

Enfin, le (ou les) cas mixte(s) d'émission d'un nombre de paquets supérieur au nombre minimal et inférieur au nombre déterminé présente, à un degré moindre, les avantages du premier cas, mais permet par contre de tolérer une erreur d'estimation de la qualité de la liaison puisque l'équipement récepteur dispose d'au moins un paquet supplémentaire par rapport au minimum estimé, comme cela a été évoqué plus haut.

On remarquera que l'invention s'applique avantageusement aux transmissions radio, mais non exclusivement. On comprendra que la transmission de données considérée désigne une transmission numérique, sans qu'intervienne la signification des données elles-mêmes, c'est-à-dire qu'il peut en particulier s'agir de signaux vocaux numérisés.

L'invention sera mieux comprise à l'aide de la description suivante d'un mode de mise en oeuvre préféré du procédé de l'invention, en référence au dessin annexé, sur lequel :
- la figure 1 représente un terminal de radiotéléphonie GSM pour la mise en oeuvre du procédé de l'invention, et
- la figure 2 est un diagramme temporel illustrant la transmission des blocs de données.

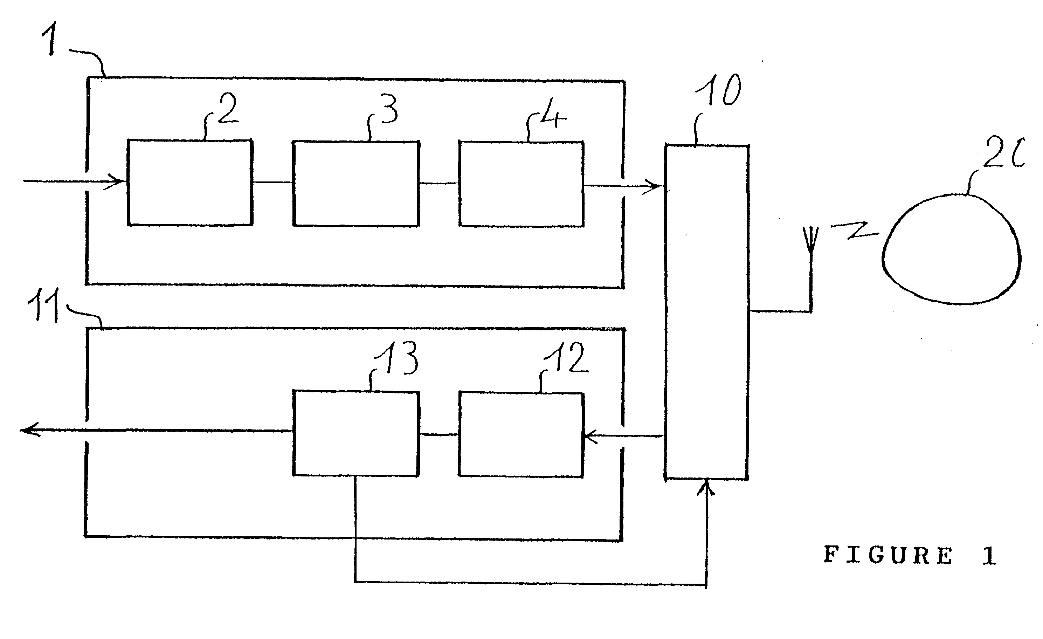

Le terminal de la figure 1 permet la transmission, bidirectionnelle dans cet exemple, de données sur un médium, ici le réseau radio GSM, 20. Les données peuvent être des données fournies par des appareils reliés au terminal ou produites par un ensemble électronique intégré au terminal, pour une application déterminée, par exemple la télécopie. Les données peuvent encore représenter un signal vocal numérisé.

Le terminal comporte un ensemble 1 d'émission radio des données, commandant une interface radio 10 d'émission/réception, et un ensemble 11 de réception de données provenant du réseau 20 à travers l'interface 10.

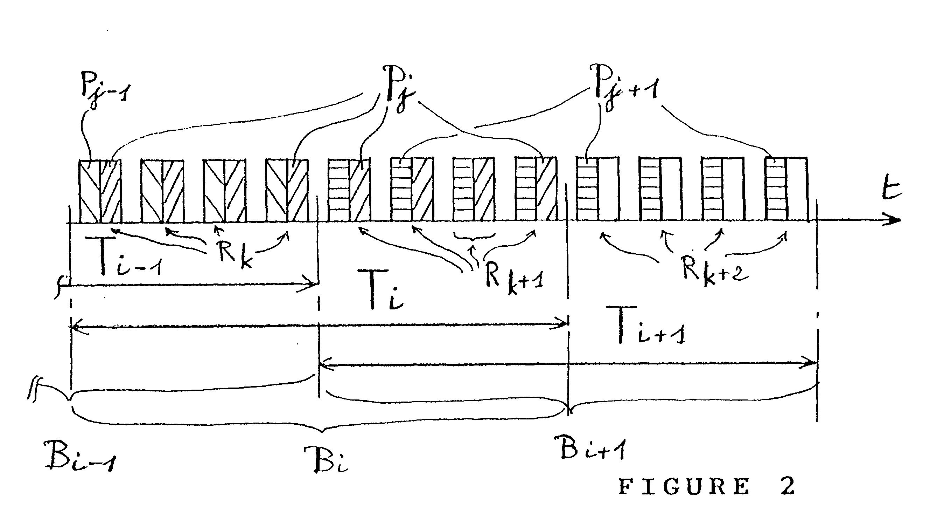

L'ensemble d'émission 1 comporte un bloc de calcul 2 recevant les données à émettre et les découpant en blocs Bi de taille déterminée qui sont traités dans un bloc de traitement 3, pour y ajouter une redondance, avant de découper, dans un bloc de calcul 4, le bloc Bi en ici quatre ou huit paquets Pj ou d'un nombre autre selon la nature des données à transmettre, et les émettre (10) par radio (fig. 2).

En réception, dans l'ensemble 11, un bloc de calcul 12 reçoit, de l'interface 10, des paquets Pj de données émis par une station du réseau 20 après un traitement semblable à celui effectué par l'ensemble 1. Le bloc de calcul 12 estime la qualité de la liaison radio d'après les signaux radio détectés par l'interface 10. Chaque paquet Pj est ensuite transmis à un bloc de calcul 13 qui effectue le regroupement des paquets Pj d'un même bloc Bi pour reconstituer les données d'origine du bloc Bi émis.

Le fonctionnement des circuits ci-dessus va être expliqué plus en détail ci-dessous.

D'une façon générale, le procédé consiste :
- à regrouper par blocs Bi les données à émettre,
- à ajouter à chaque bloc Bi à émettre des informations de redondance, et
- à fractionner le bloc à informations de redondance Bi en un nombre déterminé de paquets de bits Pj et,
   en réception,
- on reconstitue le bloc de données Bi par extraction à partir des données et des informations de redondance de paquet Pj reçus,
   et, en outre,
- on estime une qualité pour la transmission de données par la voie radio et
- on en détermine un nombre minimal de paquets Pj déterminant une redondance suffisante pour la reconstitution de chaque bloc Bi à l'aide des informations de redondance,
- on émet des paquets Pj du bloc Bi en nombre au moins égal au nombre minimal et,
- en réception, on reconstitue le bloc Bi par extraction à partir de paquets Pj en nombre correspondant au nombre minimal.

Dans un but de clarté de l'exposé, on va d'abord expliquer le cas pour lequel il est émis systématiquement le nombre déterminé de paquets Pj, c'est-à-dire que le procédé de l'invention n'est alors mis en oeuvre qu'en réception.

La figure 2 illustre, en fonction du temps t, la transmission des blocs Bi par rafales Rk, Rk + 1 de bits de paquets Pj. Cette figure correspond à une transmission, en mode actif, de blocs de bits de parole, chaque bloc Bi étant constitué de huit paquets Pj émis dans une trame Ti. Les trames de rangs successifs sont entrelacées c'est-à-dire que, outre des bits de service, les quatre premières rafales, Rk, de la trame Ti contiennent chacune un paquet Pj-1 et Pj des blocs respectifs Bi -1 et Bi, tandis que les quatre dernières rafales, Rk + 1, de la trame Ti contiennent chacune un paquet Pj et Pj + 1 des blocs respectifs Bi et Bi + 1.

Afin de localiser en permanence le terminal en mode repos ou pour échanger des données en mode actif, la station émet cycliquement un bloc de signalisation ou de données et le terminal y répond pour signaler une localisation dans une nouvelle zone radio du réseau 20 ou pour renvoyer des données.

Nous prendrons tout d'abord l'exemple d'une transmission de données en mode repos du terminal, de la station du réseau GSM 20 vers celui-ci.

Dans ce cas, le schéma de transmission de la figure 2 est simplifié en ce sens que les blocs de données Bi ne sont pas entrelacés sous la forme de huit demi-rafales Rk, Rk + 1 mais qu'ils sont simplement émis successivement sous la forme de quatre rafales Rk (ou Rk + 1), puis Rk + 2, à un seul paquet Pj, Pj + 1 chacune.

La station, qui peut être considérée comme étant équivalente au terminal, émet, par un ensemble semblable à l'ensemble 1, un bloc Bi de données de signalisation comportant 184 bits utiles, qui est réparti sur quatre rafales radio Rk de bits, toutes émises dans cet exemple.

Afin de se protéger contre des perturbations radio, les bits utiles à transmettre sont transformés pour ajouter des bits de redondance à chaque bloc Bi. Par addition d'un code Fire, on ajoute 40 bits de redondance permettant de détecter jusqu'à 40 erreurs et de corriger jusqu'à 12 erreurs. Les 224 bits ainsi obtenus subissent ensuite un codage convolutionnel dans lequel on ajoute 4 bits et on double le volume de bits, soit un bloc de 456 bits liés par la corrélation apportée par les bits de redondance.

Ces 456 bits sont répartis de façon entrelacée sur les quatre rafales Rk, ou paquets Pj, si bien que la perte d'une rafale Rk affecte le bloc Bi de façon répartie, c'est-à-dire les bits d'un certain rang, modulo 4. La redondance est telle qu'il suffit de deux rafales Rk reçues sans erreurs pour reconstituer le bloc émis Bi de 184 bits.

En réception, le terminal estime par le bloc de calcul 12 la qualité de la liaison radio et donc celle des bits de chaque rafale Rk pour déterminer le nombre minimal de paquets Pj nécessaire pour reconstituer le bloc Bi considéré. Plus précisément, en cas de détection de bits erronés, on peut considérer que le bloc Bi reçu n'appartient pas à une bibliothèque fictive de blocs Bi possibles, avec la corrélation correcte et donc acceptables, bibliothèque qui serait constituée par l'ensemble des blocs Bi reconnaissables, formés à partir des diverses combinaisons d'états des 184 bits utiles.

L'estimation de la qualité de la liaison radio peut être effectuée sur un cumul de paquets Pj reçus ou encore à la réception de chaque rafale Rk, afin d'affecter une note de qualité spécifique à chaque paquet Pj. Cette estimation peut par exemple être effectuée en prévoyant que la redondance, qui porte globalement sur le bloc Bi, porte aussi, au moins partiellement, sur chaque paquet Pj. Au niveau paquet Pj, on peut prévoir que la redondance permette la détection et la localisation, donc la correction, d'erreurs (avec le principe d'une bibliothèque de paquets), erreurs dont on mesure directement le taux, ou bien que la redondance soit plus limitée et qu'elle ne permette que la détection des erreurs, et donc l'estimation de la qualité de la liaison radio, la correction des erreurs n'intervenant que sur un cumul de paquets Pj, à partir de la redondance au niveau du bloc Bi.

Lorsqu'un paquet Pj d'une rafale Rk reçue ne présente pas la corrélation voulue entre ses bits, on le corrige, si la redondance-paquet le prévoit et s'il présente un nombre limité d'erreurs, ou bien on le laisse tel quel si les erreurs sont en nombre excessif. C'est alors la redondance de niveau supérieur, au niveau bloc Bi, qui jouera.

La correction paquet ou bloc consiste à repérer d'abord, d'après la redondance ou corrélation, des bits en nombre minimal et à les corriger, donc permuter les états 0 et 1 des bits à corriger, pour aboutir au paquet Pj ou bloc Bi reconnaissable de bits ayant une corrélation correcte, qui ressemble le plus au(x) paquet(s) reçu(s). Cependant, la probabilité n'est pas nulle pour qu'en fait il s'agisse d'un envoi d'un autre paquet Pj ou bloc Bi reconnaissable, entaché d'un nombre élevé d'erreurs (supérieur au dit nombre minimal de bits identifiés et corrigés à tort).

Pour éviter ce genre de correction malencontreuse, on affecte à chaque paquet Pj reçu une note de qualité en fonction du nombre de bits estimés être erronés, qu'ils soient corrigés ou non. Comme il est très peu probable qu'un paquet Pj ou bloc Bi émis se transforme quasi-exactement par des perturbations radio en un autre paquet Pj ou bloc Bi reconnaissable, une note de qualité élevée indique une faible probabilité de correction malencontreuse.

En variante, on peut encore estimer la qualité de la liaison radio d'après la réception de bits autres que ceux des données des blocs Bi, par exemple à partir de signaux de service de chaque rafale Rk présentant, entre eux ou individuellement dans le temps, une certaine cohérence connue, que l'on vérifie. Il ne s'agit donc pas alors, dans ce cas, d'une mesure directe du taux d'erreur du paquet Pj, mais on estime celui-ci à partir d'autres données transmises en même temps et servant en quelque sorte de marqueur ou révélateur de la qualité de transmission.

Il est encore possible d'estimer la qualité de la liaison radio par analyse analogique des signaux radio reçus. En effet, ceux-ci doivent en principe présenter un état déterminé de modulation parmi les états de modulation possibles correspondant à des états binaires. De ce fait, l'écart entre le signal analogique effectivement reçu et l'état binaire le plus semblable dénote des perturbations de la voie radio. Dans le cas général, les données peuvent se présenter sous la forme de symboles représentant un nombre déterminé de symboles élémentaires pouvant chacun prendre un nombre déterminé d'états définis, quantifiés. Par exemple, quatre bits peuvent être regroupés pour former un symbole à seize états possibles, ce symbole servant en tant que tel pour la modulation de transmission des données et/ou leur exploitation.

On peut ainsi effectuer un filtrage adaptatif des signaux reçus visant à supprimer des signaux retardés, ou échos, dus à une propagation à trajet multiple et produisant des interférences intersymboles. On soustrait alors, au signal reçu actuel, le signal antérieur, mémorisé, avec un décalage temporel et une atténuation ajustés pour réduire chaque écho à un minimum.

En bref, on crée un modèle de la voie radio et l'on effectue une poursuite du minimum pour tenir à jour le modèle.

Les signaux analogiques ainsi filtrés sont alors sensés représenter l'état logique binaire le plus proche du point de vue analogique, c'est-à-dire qu'on procède à une quantification de ceux-ci pour obtenir les bits du paquet Pj ou bloc Bi.

En cas de détection d'erreur de corrélation, cela signifie que le modèle de la voie radio, servant à la correction, est au moins partiellement erroné ou bien encore que la voie radio a été affectée par des parasites affectant la stationnarité de ses caractéristiques de transmission.

On peut alors tenter d'ajuster le modèle par une opération inverse. En effet, connaissant les signaux quantifiés restitués, et corrigés logiquement par corrélation, qui sont en fait ceux qui ont été émis, on peut les transformer par le modèle inverse afin d'obtenir les signaux analogiques qui auraient dû être reçus en tenant compte du modèle actuel. Par comparaison entre ces signaux analogiques et ceux effectivement reçus, on ajuste le modèle pour réduire au minimum l'erreur de prévision, et/ou on estime la qualité du modèle et donc la qualité des données des paquets Pj et blocs Bi. On peut en particulier affecter une note de qualité à chaque bit, indiquant une qualité d'autant meilleure qu'est faible l'écart, ou métrique, entre le signal analogique traité par filtrage et le signal quantifié, prédéterminé, de l'état logique reconnu. Il est à remarquer que l'on dispose alors d'une double redondance puisque, outre la redondance logique, il existe aussi un spectre d'échos, qui permettent au besoin, cette fois en les conservant, de reconstituer un signal binaire même si son signal fondamental du trajet le plus court n'a pas été reçu.

L'algorithme de Viterbi permet, dans l'exemple ci-dessus, de déterminer la séquence de bits d'origine la plus probable et fournit en outre la distance entre celle-ci et les bits reçus. Cette distance traduit donc une note de non-qualité dans la réception.

Le bloc de calcul 13 reçoit les blocs traités comme ci-dessus par le bloc 12, avec la note de qualité associée. Le bloc de calcul 13 peut alors limiter son analyse à deux paquets Pj pour reconstituer le bloc Bi émis, si les notes de qualité de ceux-ci sont suffisamment élevées pour indiquer une bonne probabilité de quasi-absence d'erreurs. Ce peut être le total des notes de qualité qui soit un critère de décision pour, par comparaison à un seuil, renoncer à l'analyse d'autres paquets Pj. Dans le cas où le bloc de calcul 13 doit recevoir un nombre fixe de bits, même s'il ne les exploite pas tous, on reconstitue le bloc Bi émis en remplaçant préalablement les données des paquets Pj non pris en compte par des données pseudo-aléatoires associées à une note traduisant une mauvaise qualité.

Dans un cas où le bloc de données Bi pourrait encore être reconstitué à partir des deux paquets Pj, mais où le total des notes de qualité, alors inférieur au seuil, indiquerait que les corrections ont une probabilité relativement élevée d'avoir été malencontreuses, le bloc de calcul 13 prend en compte un troisième, et éventuellement quatrième, paquet Pj du bloc Bi, ou un certain nombre de bits du paquet Pj, pour conforter la correction. Au sens de l'invention, la prise en compte d'un paquet Pj correspond donc à l'utilisation d'un certain nombre de ses données et pas obligatoirement de toutes. On réduit ainsi le risque d'erreur, estimé trop élevé, dans la correction des données reçues. Dans cet exemple donc, on estime, d'après des données reçues, un taux effectif d'erreur de transmission, d'où on déduit un risque d'erreur dans la reconstitution des blocs Bi et on analyse un paquet Pj supplémentaire si ce risque dépasse un seuil.

On notera que l'ordre dans lequel on analyse des paquets Pj peut être indépendant de l'ordre de leur réception, même si, dans cet exemple, on suit cet ordre.

Ainsi, par le procédé exposé ci-dessus, on limite l'activité de l'ensemble 11 puisque les paquets Pj ne sont pas systématiquement analysés.

Afin de réduire, en outre, la consommation de l'interface radio 10, le bloc de calcul 13 commande la désactivation de celui-ci lorsqu'a été reçu un nombre de paquets Pj suffisant pour reconstituer un bloc de données Bi, c'est-à-dire qu'il coupe la réception ou, plus exactement, ne la réactive pas à l'instant prévu dans une trame temporelle du réseau 20.

Cette désactivation ou coupure peut porter sur l'instant prévu pour la réception d'une ou plusieurs rafales Rk en position quelconque dans l'ensemble des rafales du bloc Bi. Ce peut être une
ou plusieurs des dernières rafales Rk d'un bloc Bi, après analyse et reconnaissance de premières rafales du bloc Bi. On peut encore prévoir de commander cette coupure de réception en fonction de la réception d'un bloc Bi - 1 de données antérieur, en supposant que la qualité de transmission restera inchangée, auquel cas on peut supprimer la réception d'une rafale Rk de position quelconque dans le bloc Bi de rafales considéré.

Si l'on prend maintenant l'exemple du mode actif, avec des blocs Bi de données entrelacés de huit paquets Pj représentant la parole ou des données informatiques, on peut ainsi couper la réception d'une au moins des quatre rafales Rk + 1 transmettant les quatre derniers paquets du bloc Bi, si la qualité des paquets Pj déjà reçus (Rk) du bloc Bi est suffisante, ce qui coupe aussi la réception du paquet Pj + 1 du bloc Bi + 1 de cette rafale Rk + 1 avant même que la qualité d'un nombre suffisant de paquets du bloc Bi+1 ait pu être jugée. On extrapole donc a priori la qualité du bloc Bi sur le bloc Bi + 1 pour prendre la décision de couper la réception du paquet Pj + 1 considéré et on suppose que les paquets Pj + 1 qui suivent auront une qualité suffisante. En d'autres termes, en coupant la réception du bloc de données Bi, on inhibe la réception d'un paquet du bloc de données suivant Bi + 1. On peut cependant prévoir une détection partielle de rafale Rk + 1, pour seulement un paquet Pj + 1 et des bits de service de la rafale Rk + 1, c'est-à-dire sans paquet Pj. Si, cependant, les bits des deux paquets Pj, Pj+1 étaient entrelacés, la détection partielle de la rafale Rk + 1 conduirait à une détection partielle de chacun des deux paquets Pj, Pj + 1. Dans ce cas, les bits non reçus de chacun des deux paquets Pj, Pj + 1 seraient traités comme ceux des rafales Rk non reçues.

L'application du procédé de l'invention au niveau de l'émission des paquets Pj va maintenant être expliquée.

Dans cet exemple, on limite aussi l'activité de l'ensemble d'émission 1. Pour cela, lorsque l'ensemble de réception 11 reconstitue le bloc de données Bi émises par la station sans devoir prendre en compte la totalité des paquets reçus d'un bloc Bi, l'ensemble d'émission 1, lorsqu'il doit émettre des données, n'émet qu'un nombre de paquets inférieur au nombre maximal, ici quatre ou huit, de paquets.

Plus précisément, le nombre de paquets Pj émis par l'ensemble 1 varie dans le même sens que le nombre de paquets Pj pris en compte en réception et il est même ici égal à ce nombre, c'est-à-dire ici 2, 3 (ou 4) dans l'exemple du mode repos.

La station du réseau GSM 20 considère alors, en réception, qu'un ou plusieurs paquets Pj ont été perdus et elle reconstitue le bloc Bi d'après un nombre réduit de paquets Pj, selon ce qui a été exposé pour l'ensemble 11.

Dans le cas d'un réseau radio à puissance d'émission réglable, le terminal peut en outre faire remonter à la station des résultats de mesure faussés, indiquant une réception un peu faible, pour amener celle-ci à augmenter son niveau d'émission, ce qui améliore la qualité des paquets Pj reçus et permet donc d'en exploiter un nombre limite.

De même, dans le cas de transmissions bi-directionnelles comme ici, le terminal recevant les données peut transmettre à l'équipement qui les émet, la station, des informations liées à la qualité des données qu'il en reçoit. On peut ainsi déterminer, dans le terminal, un taux d'erreur des données reçues, ou plus généralement la note de qualité (comme la métrique de démodulation), et transmettre cette note à la station à titre d'informations de qualité. On peut en particulier dégrader la note de qualité, pour simuler une insuffisance de niveau reçu compte tenu des parasites, avant de la transmettre à la station.

On peut encore prévoir de transmettre, indirectement et de façon biaisée, les informations de qualité sous la forme d'une simulation, vis-à-vis de la station qui émet les données, d'une voie radio d'atténuation accrue.

En particulier, on peut simuler l'accroissement d'atténuation radio par la transmission d'informations de qualité indiquant un niveau de signal radio reçu inférieur au niveau réel. Dans le cas du présent exemple, la station émettant les données peut dialoguer avec plusieurs combinés. Pour éviter les collisions en réception à la station, celle-ci définit une trame temporelle de réception, dans laquelle elle alloue temporairement, à chaque terminal actif, un intervalle de temps de rang déterminé, spécifique au terminal. La station asservit, par la voie radio descendante, l'instant d'émission d'une rafale Rk du terminal considéré sur la trame (voie montante), c'est-à-dire qu'elle émet vers le terminal une commande d'émission qui est anticipée pour tenir compte du temps de trajet de cette commande et du temps de trajet en retour des rafales Rk émises par le terminal. La station régule cette anticipation pour qu'elle reçoive les données selon un cadrage parfait avec l'intervalle de temps local de la station. Cette anticipation croît donc avec la longueur de la voie radio donc, en pratique, avec la réduction de qualité qui en résulte.

Afin de simuler une grande distance et donc une atténuation accrue, le terminal simule un éloignement progressif pendant un certain temps, en maintenant un retard de ses émissions malgré les commandes d'asservissement temporel reçues de la station.

Tant que ce retard n'est pas excessif, la station ne "décroche" pas vis-à-vis du terminal mais, au contraire, augmente son niveau d'émission ce qui permet donc au terminal de recevoir les paquets Pj avec une meilleure qualité et d'en prendre donc moins en compte, ce qui augmente son autonomie en énergie.

Si l'émetteur des données met en oeuvre le procédé de l'invention, et la transmission pouvant n'être que monodirectionnelle, il peut décider de lui-même de renforcer l'émission pour réduire le taux d'erreur de la voie radio et ainsi augmenter la probabilité d'une reconstitution correcte des blocs Bi. Cet émetteur peut être la station mais tout aussi bien le terminal. En effet, dans la mesure où, au renforcement de l'émission du terminal correspond une estimation de qualité de transmission améliorée, l'émission (renforcée) d'un nombre encore plus restreint de paquets Pj peut aboutir à un bilan énergétique positif. Par émission renforcée, on entend une amélioration du rapport signal/bruit de l'émission radio. Il peut par exemple s'agir d'un accroissement du niveau du signal, mais, dans certaines applications, il peut s'agir d'une accentuation de la dynamique de modulation d'amplitude, phase ou fréquence, ou encore d'une réduction de sa vitesse.

## Revendications

1. Procédé de transmission de données par voie radio entre un équipement émetteur et un équipement récepteur, à travers un milieu de transmission perturbateur, dans lequel:
- on regroupe par blocs (Bi) les données à émettre,
- on ajoute à chaque bloc (Bi) à émettre des informations de redondance, et
- on fractionne le bloc à informations de redondance (Bi) en un nombre déterminé de paquets de bits (Pj) et,
en réception,
- on reconstitue le bloc de données (Bi) par extraction à partir des données et des informations de redondance de paquets (Pj) reçus, le procédé étant **caractérisé par le fait que** :
- on estime une qualité pour la transmission de données par la voie radio et
- on en détermine un nombre minimal de paquets (Pj), déterminant une redondance suffisante pour la reconstitution de chaque bloc (Bi) à l'aide des informations de redondance,
- on émet des paquets (Pj) du bloc (Bi) en nombre au moins égal au nombre minimal et,
- en réception, on reconstitue le bloc (Bi) par extraction à partir de paquets (Pj) en nombre correspondant au nombre minimal.

2. Procédé de transmission selon la revendication 1, dans lequel on émet un nombre de paquets (Pj) supérieur au nombre minimal et, en réception, on extrait le bloc (Bi) à partir d'un nombre de paquets (Pj) égal au moins au nombre minimal augmenté d'une unité.

3. Procédé de transmission selon la revendication 2, dans lequel, en réception, on estime, d'après des données reçues, un taux effectif d'erreur de transmission, d'où on déduit un risque d'erreur dans la reconstitution des blocs (Bi) et on prend en compte un paquet (Pj) supplémentaire si ce risque dépasse un seuil.

4. Procédé de transmission selon l'une des revendications 2 et 3, dans lequel, en réception, on prend en compte les paquets (Pj) dans l'ordre de leur réception.

5. Procédé de transmission selon l'une des revendications 2 à 4 dans lequel, en réception, on attribue à chaque paquet (Pj) reçu une note de qualité, en fonction d'un nombre estimé d'erreurs et on renonce à la prise en compte d'autres paquets lorsque les notes de qualité cumulées des paquets considérés dépassent un seuil.

6. Procédé de transmission selon la revendication 5, dans lequel, en réception, on reconstitue le bloc (Bi) de données émises en remplaçant préalablement les données des paquets (Pj) non pris en compte par des données pseudo-aléatoires associées à une note traduisant une mauvaise qualité.

7. Procédé de transmission selon l'une des revendications 1 à 6, dans lequel on coupe la réception des données lorsqu'a été reçu un nombre de bits de paquets estimé, d'après la qualité, être suffisant pour reconstituer un bloc de données (Bi).

8. Procédé de transmission selon la revendication 7, dans lequel, en coupant la réception dudit bloc des données (Bi), on inhibe la réception d'un paquet (Pj + 1) du bloc de données suivant (Bi + 1).

9. Procédé de transmission selon l'une des revendications 7 et 8, dans lequel, les paquets de données étant émis par rafales (Rk + 1) comportant chacune deux paquets (Pj, Pj + 1) appartenant à deux blocs respectifs (Bi, Bi + 1), on effectue une détection partielle de rafale (Rk + 1) en coupant la réception de bits de l'un au moins des paquets (Pj, Pj + 1).

10. Procédé de transmission selon l'une des revendications 1 à 9, dans lequel, dans le cas de transmissions bidirectionnelles, l'équipement récepteur des données transmet, à l'équipement émetteur des données, des informations liées à la qualité des données qu'il en reçoit.

11. Procédé de transmission selon la revendication 10, dans lequel on détermine, dans l'équipement récepteur des données, une note de qualité des données reçues et on la transmet à l'équipement, émetteur de données à titre d'informations de qualité.

12. Procédé de transmission selon la revendication 11, dans lequel on dégrade la note de qualité avant de la transmettre à l'équipement émetteur.

13. Procédé de transmission selon la revendication 10, dans lequel on engendre les informations de qualité par simultation, vis-à-vis de l'équipement émetteur des données, d'une voie radio d'atténuation accrue.

14. Procédé de transmission selon la revendication 13, dans lequel on simule l'accroissement d'atténuation radio par la transmission d'informations de qualité indiquant un niveau de signal radio reçu inférieur au niveau réel.

15. Procédé de transmission selon l'une des revendications 10 à 14, dans lequel, l'équipement émetteur des données des blocs (Bi) étant agencé pour recevoir des émissions, successives, provenant de l'équipement récepteur des données, dans un intervalle de temps alloué d'une trame temporelle de réception desdites émissions, on retarde, dans l'équipement récepteur des données, les instants des émissions successives par rapport à des instants prévus de synchronisation sur la trame, afin de simuler un temps de propagation radio, donc une atténuation, accru.

16. Procédé de transmission selon l'une des revendications 1 à 15, dans lequel, dans le cas de transmissions bidirectionnelles, lorsqu'un équipement reconstitue le bloc (Bi) de données émises sans devoir prendre en compte la totalité des paquets (Pj) du bloc (Bi), ledit équipement, lorsqu'il devient émetteur, n'émet qu'un nombre de paquets (Pj) inférieur audit nombre déterminé.

17. Procédé de transmission selon la revendication 16, dans lequel le nombre de paquets (Pj) émis varie dans le même sens que le nombre de paquets analysés en réception.

18. Procédé de transmission selon la revendication 17, dans lequel lesdits nombres sont égaux.

19. Procédé de transmission selon l'une des revendications 1 à 18, dans lequel, lorsque l'équipement émetteur des données émet un nombre de paquets (Pj) inférieur au nombre déterminé de paquets du bloc (Bi), on renforce son émission pour réduire le taux d'erreur de la voie radio.

## Claims

1. Data transmission method by radiocommunication channel between transmitting equipment and receiving equipment through an interfering transmission milieu whereby:
- the data to be transmitted are grouped together in blocks (Bi);
- redundancy information is added to each block (Bi) to be transmitted , and
- the redundancy information block (Bi) is split into a particular number of packets of bits (Pj) and,
when receiving,
- the data block (Bi) is built up again by extraction from the data and from the redundancy information packets (Pj) received, the method being **characterised by** the fact that:
- a quality for the data transmission by the radiocommunication channel is estimated, and
- a minimum number of packets (Pj) is determined, determining a sufficient redundancy for again building up each block (Bi) by means of the redundancy information,
- packets (Pj) of the block (Bi) are transmitted at least equal in number to the minimum number, and
- when receiving, the block (Bi) is again built up by extraction from packets (Pj) corresponding in number to the minimum number.

2. Transmission method according to Claim 1 whereby a number of packets (Pj) larger than the minimum number is transmitted and, when receiving, the block (Bi) is extracted from a number of packets (Pj) at least equal to the minimum number increased by one unit.

3. Transmission method according to Claim 2 whereby, when receiving, an effective rate of transmission error is estimated, from the data received, from which the risk of error in again building up the blocks (Bi) is deduced and an extra packet (Pj) is taken into account if this risk goes beyond a threshold.

4. Transmission method according to one of the Claims 2 and 3 whereby, when receiving, the packets (Pj) are taken into account in the order in which they are received.

5. Transmission method according to one of the Claims 2 to 4 whereby, when receiving, a quality mark is assigned to each packet (Pj), in relation to an estimated number of errors, and taking other packets into account is waived when the cumulative quality marks of the packets in question go beyond a threshold.

6. Transmission method according to Claim 5 whereby, when receiving, the data block (Bi) transmitted is again built up by previously replacing the data of the packets (Pj) not taken into account by the pseudo-random data associated with a mark which indicates poor quality.

7. Transmission method according to one of the Claims 1 to 6 whereby the receiving of data is cut off when a number of bits of packets has been received, estimated, according to the quality, to be sufficient for again building up a data block (Bi).

8. Transmission method according to Claim 7 whereby, by cutting off the receiving of the said data block (Bi), the receiving of a packet (Pj + 1) from the next data block (Bi +1) is inhibited.

9. Transmission method according to one of the Claims 7 and 8 whereby, the data packets being transmitted in bursts (Rk + 1) each comprising two packets (Pj, Pj + 1) belonging to two respective blocks (Bi, Bi +1), partial detection of a burst (Rk +1) is made while cutting off receiving of bits from at least one of the packets (Pj, Pj + 1).

10. Transmission method according to one of the Claims 1 to 9 whereby, in the case of two-way transmissions, the data receiving equipment transmits to the data transmitting equipment information connected with the quality of the data which it receives from it.

11. Transmission method according to Claim 10 whereby, in the data receiving equipment, a quality mark for the data received is determined and it is transmitted to the data transmitting equipment as information on quality.

12. Transmission method according to Claim 11 whereby the quality mark is degraded before transmitting it to the transmitting equipment.

13. Transmission method according to Claim 10 whereby information on quality is created by simulation, with regard to the data transmitting equipment, of an increased attenuation radio channel.

14. Transmission method according to Claim 13 whereby the increase in radio attenuation is simulated by the transmission of information on quality indicating a level of radio signal received below the real level.

15. Transmission method according to one of the Claims 10 to 14 whereby, the equipment transmitting the data of the blocks (Bi) being arranged to receive successive transmissions originating from the data receiving equipment, in a space of time allowed from a time frame for receiving the said transmissions, in the data receiving equipment the instants of the successive transmissions compared with the instants planned from synchronisation on the frame are delayed in order to simulate a radio propagation time, and therefore increased attenuation.

16. Transmission method according to one of the Claims 1 to 15 whereby, in the case of two-way transmissions, when an equipment again builds up the block {Bi} of data transmitted without having to take account of all of the packets (Pj) of the block (Bi), the said equipment, when it becomes a transmitter, only transmits a lower number of packets (Pj) than the said number determined.

17. Transmission method according to Claim 16 whereby the number of packets (Pj) transmitted varies in the same direction as the number of packets analysed when receiving.

18. Transmission method according to Claim 17 whereby the said numbers are equal.

19. Transmission method according to one of the Claims 1 to 18 whereby, when the data transmitting equipment transmits a lower number of packets (Pj) than the determined number of packets of the block (Bi), its transmission is strengthened in order to reduce the rate of error of the radiocommunication channel.

## Patentansprüche

1. Übertragungsverfahren von Daten über einen Funkpfad zwischen einem Sendegerät und einem Empfangsgerät durch einen Störsendebereich, bei dem :
- die zu sendenden Daten zu Blöcken (Bi) zusammengefasst werden,
- jedem zu sendenden Block (Bi) Redundanzinformationen hinzugefügt werden, und
- und der Block mit den Redundanzinformationen (Bi) in eine bestimmte Anzahl von Bitpaketen (Pj) aufgeteilt wird, und
beim Empfang
- die Datenblöcke (Bi) durch Extraktion aus den empfangenen Daten und Redundanzinformationspaketen (Pj) wieder hergestellt werden, wobei das Verfahren
**dadurch gekennzeichnet ist, dass**:
- ein Qualitätskriterium für die Datenübertragung über den Funkpfad abgeschätzt wird, und
- eine Mindestanzahl an Paketen (Pj) bestimmt wird, die eine ausreichende Redundanz für die Wiederherstellung eines jeden Blocks (Bi) mittels der Redundanzinformationen bestimmt
- Pakete (Pj) des Blocks (Bi) in einer Anzahl verschickt werden, die zumindest gleich der Mindestanzahl ist, und
- beim Empfang der Block (Bi) durch Extraktion aus den Paketen (Pj) in einer Anzahl wiederhergestellt wird, die der Mindestanzahl entspricht.

2. Übertragungsverfahren nach Anspruch 1,
**dadurch gekennzeichnet, dass**
eine Anzahl an Paketen (Pj) versandt wird, die größer als die Mindestanzahl ist, und beim Empfang der Block (Bi) aus einer Anzahl an Paketen (Pj) extrahiert wird, die zumindest gleich der um eine Einheit erhöhten Mindestanzahl ist.

3. Übertragungsverfahren nach Anspruch 2,
**dadurch gekennzeichnet, dass**
beim Empfang entsprechend der empfangenen Daten eine tatsächliche Übertragungsfehlerquote abgeschätzt wird, wobei ein Fehlerrisiko bei der Wiederherstellung der Blöcke (Bi) abgeleitet und ein zusätzliches Paket (Pj) berücksichtigt wird, wenn dieses Risiko einen Schwellenwert übersteigt.

4. Übertragungsverfahren nach einem der Ansprüche 2 oder 3,
**dadurch gekennzeichnet, dass**
beim Empfang die Pakete (Pj) in der Reihenfolge ihres Eingangs berücksichtigt werden.

5. Übertragungsverfahren nach einem der Ansprüche 2 bis 4,
**dadurch gekennzeichnet, dass**
beim Empfang jedem eingegangenen Paket (Pj) in Abhängigkeit von einer veranschlagten Fehlerzahl eine Qualitätsnote zugeteilt wird, und auf die Berücksichtigung anderer Pakete verzichtet wird, wenn die kumulierten Qualitätsnoten der in Frage kommenden Pakete einen Schwellenwert übersteigen.

6. Übertragungsverfahren nach Anspruch 5,
**dadurch gekennzeichnet dass**
beim Empfang der Block (Bi) der gesendeten Daten wieder hergestellt wird, indem vorher die Daten der nicht berücksichtigten Pakete (Pj) durch Pseudozufallsdaten ersetzt werden, die einer für eine schlechte Qualität stehenden Note zugeordnet sind.

7. Übertragungsverfahren nach einem der Ansprüche 1 bis 6,
**dadurch gekennzeichnet, dass**
der Empfang der Daten unterbrochen wird, wenn eine abgeschätzte Anzahl an Bitpaketen eingegangen ist, die von der Qualität her ausreicht, um einen Datenblock (Bi) wiederherzustellen.

8. Übertragungsverfahren nach Anspruch 7,
**dadurch gekennzeichnet, dass**
beim Unterbrechen des Empfangs des Datenblocks (Bi) der Empfang eines Paketes (Pj + 1) des folgenden Datenblocks (Bi + 1) verhindert wird.

9. Übertragungsverfahren nach einem der Ansprüche 7 und 8,
**dadurch gekennzeichnet, dass**
die Datenpakete in Stößen (Rk + 1) versandt werden, wovon jeder zwei Pakete (Pj, Pj + 1) umfasst, die zwei jeweiligen Blöcken (Bi, Bi + 1) angehören, wobei eine eine teilweise Erfassung der Stösse (Rk + 1) durchgeführt wird, indem der Empfang von Bits mindestens eines der Pakete (Pj, Pj + 1) unterbrochen wird.

10. Übertragungsverfahren nach einem der Ansprüche 1 bis 9,
**dadurch gekennzeichnet, dass**
im Falle von bidirektionalen Übertragungen, das Empfangsgerät für die Daten, das diese Daten empfängt an das Sendegerät für die Daten Informationen überträgt, die mit der Qualität der Daten zusammenhängen.

11. Übertragungsverfahren nach Anspruch 10,
**dadurch gekennzeichnet, dass**
im Empfangsgerät für die Daten eine Qualitätsnote für die empfangenen Daten bestimmt wird, und diese als Qualitätsinformationen an das Sendegerät für die Daten übertragen wird.

12. Übertragungsverfahren nach Anspruch 11,
**dadurch gekennzeichnet, dass**
die Qualitätsnote herabgesetzt wird, bevor sie an das Sendegerät gesandt wird.

13. Übertragungsverfahren nach Anspruch 10,
**dadurch gekennzeichnet, dass**
gegenüber dem Sendegerät für die Daten Qualitätsinformationen durch Simulation eines Funkpfads mit erhöhter Dämpfung erzeugt werden.

14. Übertragungsverfahren nach Anspruch 13,
**dadurch gekennzeichnet, dass**
die Erhöhung der Funkdämpfung durch die Übertragung von Qualitätsinformationen simuliert wird, die einen Pegel des empfangenen Funksignals anzeigen, der unter dem tatsächlichen Pegel liegt.

15. Übertragungsverfahren nach einem der Ansprüche 10 bis 14,
**dadurch gekennzeichnet, dass**
das Sendegerät für die Datenblöcke (Bi) so ausgelegt ist, dass es aufeinanderfolgende Sendungen, die vom Empfangsgerät für die Daten kommen, in einem von einem von einem Empfangszeitrahmen für diese Sendungen zugeteilten Zeitintervall empfängt, und im Empfangsgerät für die Daten die Zeitpunkte der aufeinanderfolgenden Sendungen bezüglich der vorgesehenen Zeitpunkte für die Synchronisation in dem Rahmen verzögert werden, um eine erhöhte Funklaufzeit und somit Dämpfung zu simulieren.

16. Übertragungsverfahren nach einem der Ansprüche 1 bis 15,
**dadurch gekennzeichnet, dass**
im Falle von bidirektionalen Übertragungen, wenn ein Gerät den Block (Bi) der gesendeten Daten wieder herstellt, ohne alle Pakete (Pj) des Blocks (Bi) berücksichtigen zu müssen, das Gerät, wenn es Sender wird, nur eine Anzahl an Paketen (Pj) sendet, die kleiner als die bestimmte Anzahl ist.

17. Übertragungsverfahren nach Anspruch 16,
**dadurch gekennzeichnet, dass**
die Anzahl an gesendeten Paketen (Pj) im gleichen Sinne variiert wie die Anzahl der beim Empfang analysierten Pakete.

18. Übertragungsverfahren nach Anspruch 17,
**dadurch gekennzeichnet, dass**
diese Anzahlen gleich sind.

19. Übertragungsverfahren nach einem der Ansprüche 1 bis 18,
**dadurch gekennzeichnet, dass**
wenn das Sendegerät für die Daten eine Anzahl an Paketen (Pj) sendet, die kleiner als die vorbestimmte Anzahl an Paketen des Blocks (Bi) ist, dessen Sendung verstärkt wird, um die Fehlerquote des Funkpfads zu senken.
